# EUROPÄISCHE PATENTANMELDUNG

(11) **EP 4 471 550 A1**
(43) Veröffentlichungstag der Anmeldung: **04.12.2024**
(21) Anmeldenummer: 23176144.6
(22) Anmeldetag: 30.05.2023
(51) Int. Cl.: G06F 3/0362, G06F 3/01, B60K 35/00

(54) **BEDIENEINRICHTUNG MIT VERBESSERTER ZEITLICHER ABSTIMMUNG VON OPTISCHER UND HAPTISCHER AUSGABE, ZUGEHÖRIGE VERWENDUNG UND ZUGEHÖRIGES VERFAHREN**

(71) Anmelder: Preh GmbH, 97616 Bad Neustadt a.d. Saale (DE)
(72) Erfinder: OFENHITZER, Thomas, 97616 Salz (DE)
(74) Vertreter: Lohmanns, Bernard

(57) **Zusammenfassung**

Die Erfindung betrifft eine Bedieneinrichtung (1) aufweisend: eine elektronische Pixelmatrixanzeige (10), um einem Bediener einen optischen Anzeigeinhalt auf einer Anzeigefläche (11) zu visualisieren; ein elektromechanisches Eingabeteil (2) zur Vornahme einer händischen Verstellung als Bedieneingabe durch den Bediener; eine Steuereinheit (3), die mit dem elektromechanischen Eingabeteil (2) zur Übermittlung einer Stellungsinformation verbunden ist und mit der elektronischen Pixelmatrixanzeige (10) verbunden ist, um eine Änderung des optischen Anzeigeinhalts auf eine Stellungsänderung des elektromechanischen Eingabeteils (2) mittels der Steuereinheit (3) zu triggern; wobei die Steuereinheit (3) über einen Datenbus (4a) mit der elektronischen Pixelmatrixanzeige (10) und/oder über den oder einen weiteren Datenbus (4c) mit dem elektromechanischem Eingabeteil (2) verbunden ist, so dass eine Änderung des optischen Anzeigeinhalts mit einer vorgegebenen Latenz auf die Stellungsänderung bewirkt wird; einen auf das elektromechanische Eingabeteil (2) einwirkenden Aktuator (15), der mit der Steuereinheit (3) verbunden ist, um mittels eines von der Steuereinheit (3) ausgegebenen Steuersignals nach der durch die Verstellung bewirkten Stellungsänderung ein für den Bediener haptisch merkbares Feedback zu erzeugen; wobei die Ausgabe des Steuersignals an den Aktuator (15) durch die Steuereinheit (3) verzögert wird, um die Latenz zumindest teilweise zu kompensieren; und der Aktuator (15) zur Erzeugung eines der Verstellung eines Bedienknopfs (5) des elektromechanischen Eingabeteils (2) entgegengerichteten Gegenmoments als haptisches Feedback bei der Verstellung des Bedienknopfs (5) ausgebildet ist; sowie zugehörige Verwendung und Verfahren.

## Beschreibung

Die Erfindung betrifft eine Bedieneinrichtung, welche eine elektronische Pixelmatrixanzeige, um einem Bediener einen optischen Anzeigeinhalt zu visualisieren, eine über einen Datenbus mit der elektronischen Pixelmatrixanzeige verbundene Steuereinheit, die eine Änderung des optischen Anzeigeinhalts über den Datenbus mit einer vorgegebenen Latenz bewirkt und einen elektromechanisches Eingabeteil, wie einen Drehsteller, zur Vornahme einer händischen Verstellung als Bedieneingabe durch den Bediener, wobei das elektromechanische Eingabeteil mit der Steuereinheit zur Übermittlung einer Stellungsinformation verbunden ist, um eine Änderung des optischen Anzeigeinhalts durch die Steuereinheit zu triggern. Darüber hinaus weist die Bedieneinrichtung einen auf das elektromechanische Eingabeteil einwirkenden Aktuator auf, der mit der Steuereinheit verbunden ist, um mittels eines von der Steuereinheit ausgegebenen Steuersignals ein für den Bediener während der Verstellung haptisch merkbares Feedback zu erzeugen. Bei den bisher bekannten Lösungen ist die Veränderung des optischen Anzeigeinhalts nicht mit dem haptischen Feedback synchronisiert, was die Qualität der Rückmeldung beeinträchtigt. Zwar ist der Bediener anhand des haptischen Feedbacks immer noch in der Lage die Betätigung zu verifizieren aber immer dann, wenn durch oder im Verlauf der Betätigung eine Veränderung des optischen Anzeigeinhalts bewirkt wird, stört die mangelnde zeitliche Übereinstimmung zwischen Wechsel des Anzeigeinhalts und Einsetzen des haptischen Feedbacks. Wird beispielsweise die jeweilige Stellung oder ein gewisser Stellungsbereich des Drehstellers durch Aufleuchten eines Anzeigefelds einer Abfolge von mehreren Anzeigefeldern, beispielsweise in Form einer balkenförmigen Pegelanzeige realisiert, kommt es bei der Verstellung des Drehstellers um ein vorgegebenes Verstellmaß zu einer durch die Steuereinheit veranlassten Änderung des optischen Anzeigeinhalts beispielsweise zum Aufleuchten eines weiteren oder anderen Anzeigefeldes der mehreren Anzeigefelder. Diese Änderung erfolgt nicht unmittelbar mit Ausgabe eines entsprechenden Befehls der Steuereinheit, sondern die nachfolgende Datenkommunikation über den Datenbus zur elektronischen Pixelmatrixanzeige, die zugehörige Datenverarbeitung der Pixelmatrixanzeige sowie die Pixelreaktionszeit (letztere beiden werden auch als input lag bezeichnet) führen zu einer Verzögerung der Änderung des optischen Anzeigeinhalts gegenüber der Ausgabe der Steuereinheit, was als Latenz bezeichnet wird, und deckt sich nicht mit der Reaktionszeit des Aktuators, mit der das haptische Feedback auf die Ausgabe des zugehörigen Steuersignals durch die Steuereinheit reagiert. Gegenüber der Latenz ist die Reaktionszeit bei den üblichen Aktuatoren vernachlässigbar, so dass die der haptischen Rückmeldung hinterherhinkende visuelle Rückmeldung vom Bediener als störend wahrgenommen wird und den Bediener zu Fehlbedienungen, wie "Überregeln", des Drehstellers verleitet, da er sich üblicherweise primär visuell orientiert.

Vor diesem Hintergrund bestand Bedarf nach einer Bedieneinrichtung, bei der die Gefahr von Fehlbedienungen reduziert ist. Diese Aufgabe wird durch eine Bedieneinrichtung gemäß Anspruch 1 gelöst. Eine gleichermaßen vorteilhafte Verwendung sowie zugehöriges Verfahren sind jeweils Gegenstand nebengeordneter Ansprüche. Die in den abhängigen Ansprüchen aufgeführten Merkmale können in beliebiger, technologisch sinnvoller Weise miteinander kombiniert werden und zweigen weitere Ausgestaltungen der Erfindung auf. Die Beschreibung, insbesondere im Zusammenhang mit den Figuren, charakterisiert und spezifiziert die Erfindung zusätzlich.

Die Erfindung betrifft eine Bedieneinrichtung, die eine elektronische Pixelmatrixanzeige aufweist, um einem Bediener einen optischen Anzeigeinhalt auf einer zugehörigen Anzeigefläche zu visualisieren. Bevorzugt ist die Anzeigefläche eben ausgebildet. Beispielsweise handelt es sich um eine hintergrundbeleuchtete Flüssigkristallanzeige, beispielsweise im TFT-Aufbau, oder eine Anzeige in OLED-Bauweise. Die elektronische Pixelmatrixanzeige ist in einer Ausgestaltung berührungsempfindlich ausgebildet und weist bevorzugt eine transparente Elektrodenstruktur zur ortsaufgelösten kapazitiven Berührdetektion aus.

Die erfindungsgemäße Bedieneinrichtung weist ferner eine Steuereinheit auf, die mit dem elektromechanischen Eingabeteil zur Übermittlung einer Stellungsinformation, insbesondere einer Stellungsänderung, und mit der elektronischen Pixelmatrixanzeige verbunden ist, um eine Änderung des optischen Anzeigeinhalts der elektronischen Pixelmatrixanzeige in Folge einer Stellungsänderung des elektromechanischen Eingabeteils mittels der Steuereinheit zu triggern. Dabei ist erfindungsgemäß die Steuereinheit über einen Datenbus mit der elektronischen Pixelmatrixanzeige und/oder über einen weiteren Datenbus mit dem elektromechanischem Eingabeteil verbunden, so dass eine Änderung des optischen Anzeigeinhalts mit einer vorgegebenen Latenz auf die Stellungsänderung bewirkt wird.

Beispielsweise kommuniziert die Steuereinheit mit der elektrischen Pixelmatrixanzeige, bzw. dem elektromechanischen Eingabeteil über einen CAN-Bus, LIN-BUS, Felxray-Bus, MOST-Bus, TTCAN-Bus. Als Latenz wird hier nicht nur die durch die Datenübertragung verursachte maximale Verzögerung angesehen, sondern die Summe aller maximal möglichen Verzögerungen, die neben der reinen Datenbus Übertragung auch durch die Treiberelektronik der elektronischen Pixelmatrixanzeige verursacht wird. In der Regel wird die Latenz von einer durch den wenigstens einen Datenbus verursachte Verzögerung dominiert sein. Da letztere aber, insbesondere beim CAN-Bus, mit der Anzahl der gleichzeitig sendenden Einheiten des BUS-Systems variiert, obliegt es dem Fachmann, hier eine maximale Latenz statistisch anhand der zu erwartenden Kommunikationssituation zu ermitteln.

Erfindungsgemäß ist ein elektromechanisches Eingabeteil, insbesondere ein Drehsteller, zur Vornahme einer händischen Verstellung, insbesondere Drehverstellung, als Bedieneingabe durch den Bediener vorgesehen. Das elektromechanische Eingabeteil ist erfindungsgemäß mit der Steuereinheit zur Übermittlung einer Stellungsinformation verbunden, um eine Änderung des optischen Anzeigeinhalts auf eine Stellungsänderung des elektromechanischen Eingabeteils mittels der Steuereinheit zu triggern.

Erfindungsgemäß ist ferner ein auf das elektromechanische Eingabeteil, wie den Drehsteller, einwirkender Aktuator vorgesehen, der mit der Steuereinheit verbunden ist, um mittels eines von der Steuereinheit ausgegebenen Steuersignals nach der durch die Verstellung bewirkten Stellungsänderung ein für den Bediener haptisch merkbares Feedback zu erzeugen. Erfindungsgemäß ist der Aktuator zur Erzeugung eines der Verstellung eines Bedienknopfs des elektromechanischen Eingabeteils entgegengerichteten Gegenmoments, auch als Lastmoment bezeichnet, als haptisches Feedback bei der Verstellung des Bedienknopfs ausgebildet.

Erfindungsgemäß wird die Ausgabe des Steuersignals an den Aktuator durch die Steuereinheit verzögert, um die zuvor erwähnte Latenz zumindest teilweise zu kompensieren. Beispielsweise wird bei einer Reaktionszeit des Aktuators, also die verstrichene Zeit zwischen Empfang des Steuersignals und haptisch merklicher Reaktion am Bedienteil des elektromechanischen Eingabeteils, die Verzögerung auf eine um die Reaktionszeit verkürzte Latenz eingestellt. Die erfindungsgemäße Vorgehensweise sorgt dafür, dass die optische Reaktion mit der haptischen Reaktion in zeitlicher Hinsicht zusammenrückt, was dazu führt, dass Irritationen des Bedieners bezüglich des Umfangs seiner Verstellung vermieden werden und eine daraus veranlasste Überverstellung unwahrscheinlicher wird, also insgesamt die Bedienzuverlässigkeit erhöht wird. Bevorzugt wird die Latenz bis auf einen maximalen zeitlichen Abstand von 30ms, bevorzugt 20ms, zwischen Änderung des optischen Anzeigeinhalts und einem Einsetzen des haptisch merkbaren Feedbacks kompensiert.

Um den Verschleiß zu minimieren, weist der Aktuator bevorzugt einen Rotor, beispielsweise aus einem ferromagnetischen Material, und eine Spule zur Erzeugung eines mit dem Rotor zusammenwirkenden Magnetfelds auf.

Bevorzugt weist das elektromechanische Eingabeteil einen rotatorisch beweglich gelagerten Bedienknopf zu einer händischen Drehverstellung des Bedienknopfs, eine drehfest mit dem Bedienknopf verbundene Eingangswelle; ein Getriebe zur Übertragung der Drehverstellung des Bedienknopfs auf eine Ausgangswelle; einen an der Ausgangswelle festgelegten Drehstellungsgeber; einen mit dem Drehstellungsgeber zusammenwirkenden, ruhenden Drehstellungsnehmer zur Detektion der Drehverstellung des Bedienknopfs auf, wobei der Aktuator auf die Ausgangswelle wirkt. Beispielsweise ist die durch die Lagerung der Eingangswelle vorgegebene axiale Führungslänge größer als der Durchmesser des Bedienknopf. Der Drehstellungsgeber ist beispielsweise ein Permanentmagnet und der Drehstellungsnehmer ein Hall-Sensor.

Um ausgeprägte Lastmomente zu erzeugen, weist das Getriebe des elektromechanischen Eingabeteils von Eingangswelle zu Ausgangswelle ein Übersetzungsverhältnis größer 1 auf.

Bevorzugt ist das Getriebe ein Winkelgetriebe und weist bevorzugt abtriebsseitig, d.h ein an der Ausgangswelle festgelegtes Kronrad auf.

Bevorzugt erstreckt sich die Ausgangswelle parallel zur Anzeigefläche.

Bevorzugt ist vorgesehen, dass der Bedienknopf die Anzeigefläche in axialer und/oder radialer Richtung überragt.

Bevorzugt erstreckt sich die Eingangswelle entlang einer Flanke der elektronischen Pixelmatrixanzeige von einer dem Bediener zugewandten, die optische Anzeigefläche umfassenden Oberseite der elektronischen Pixelmatrixanzeige zu einer Rückseite der elektronischen Pixelmatrixanzeige. Bevorzugter ist dabei die Eingangswelle orthogonal zu der von der Anzeigefläche aufgespannten Ebene orientiert

Bevorzugt sind der Bedienknopf und die Eingangswelle in axialer Richtung und/oder in radialer Richtung jeweils entgegen einer Rückstellkraft bewegbar gelagert. Beispielsweise ist die Eingangswelle in einem beweglichen Zwischengehäuse gelagert, das beweglich an einem Außengehäuse gelagert und in diesem aufgenommen ist. Beispielsweise ist das Zwischengehäuse samt Bedienknopf in axialer Richtung der Eingangswelle niederdrückbar und/oder um einen zur Eingangswelle senkrechten Schwenkzapfen verschwenkbar. Der jeweilige Freiheitsgrad ist bevorzugt durch eine zugehörige Detektionseinrichtung detektierbar, um so dem Drehsteller als elektromechanisches Eingabeteil zusätzliche Eingabefunktionalitäten zu verleihen.

Die Erfindung betrifft ferner die Verwendung der Bedieneinrichtung gemäß einer der zuvor beschriebenen Ausführungsformen in einem Kraftfahrzeug.

Die Erfindung betrifft ferner ein Verfahren zur Steuerung eines haptischen Feedbacks, mit den folgenden Schritten. In einem Bereitstellungsschritt erfolgt ein Bereitstellen einer Bedieneinrichtung. Die bereitgestellte Bedieneinrichtung weist eine elektronische Pixelmatrixanzeige auf, um einem Bediener einen optischen Anzeigeinhalt auf einer Anzeigefläche zu visualisieren. Die bereitgestellte Bedieneinrichtung weist ferner ein elektromechanisches Eingabeteil zur Vornahme einer händischen Verstellung als Bedieneingabe durch den Bediener auf. Die bereitgestellte Bedieneinrichtung weist ferner eine Steuereinheit auf, die mit dem elektromechanischen Eingabeteil zur Übermittlung einer Stellungsinformation und mit der elektronischen Pixelmatrixanzeige verbunden ist, um eine Änderung des optischen Anzeigeinhalts auf eine Stellungsänderung des elektromechanischen Eingabeteils mittels der Steuereinheit zu triggern, dabei ist die Steuereinheit über einen Datenbus mit der elektronischen Pixelmatrixanzeige und/oder über den oder einen weiteren Datenbus mit dem elektromechanischem Eingabeteil verbunden ist, so dass eine Änderung des optischen Anzeigeinhalts über den Datenbus mit einer vorgegebenen Latenz auf die Stellungsänderung bewirkt wird. Die bereitgestellte Bedieneinrichtung weist ferner einen auf das elektromechanische Eingabeteil einwirkenden Aktuator auf, der mit der Steuereinheit verbunden ist, um mittels eines von der Steuereinheit ausgegebenen Steuersignals nach der durch die Verstellung bewirkten Stellungsänderung ein für den Bediener haptisch merkbares Feedback zu erzeugen, wobei der Aktuator zur Erzeugung eines der Verstellung eines Bedienknopfs des elektromechanischen Eingabeteils entgegengerichteten Gegenmoments als haptisches Feedback bei der Verstellung des Bedienknopfs ausgebildet ist.

In einem Auslöseschritt des erfindungsgemäßen Verfahrens, welcher einer durch den Bediener bewirkten Stellungsänderung des elektromechanischen Eingabeteils zeitlich nachfolgt, erfolgt ein Triggern einer Änderung des optischen Anzeigeinhalts der elektronischen Pixelmatrixanzeige mittels der Steuereinheit.

In einem Änderungsschritt des erfindungsgemäßen Verfahrens erfolgt eine Änderung des optischen Anzeigeinhalts der elektronischen Pixelmatrixanzeige mit einer vorgegebenen Latenz auf die Stellungsänderung.

Ein einem Ausgabeschritt des erfindungsgemäßen Verfahrens erfolgt eine Ausgabe des Steuersignals an den Aktuator durch die Steuereinheit, wobei die Verzögerung so gewählt ist, dass die Latenz zumindest teilweise kompensiert wird.

Bevorzugt wird die Latenz bis auf einen maximalen zeitlichen Abstand von 30ms, bevorzugt 20ms, zwischen Änderung des optischen Anzeigeinhalts und einem Einsetzen des haptisch merkbaren Feedbacks kompensiert.

Die Erfindung wird anhand der nachfolgenden Figuren näher erläutert. Die Figuren sind dabei nur beispielhaft zu verstehen und stellen lediglich eine bevorzugte Ausführungsvariante dar. Es zeigen:
- Figur 1: eine perspektivische Ansicht einer Ausführungsform der erfindungsgemäßen Bedieneinrichtung 1;
- Figur 2: eine perspektivische Detailansicht des zur erfindungsgemäßen Bedieneinrichtung 1 aus Figur 1 gehörigen elektromechanischen Eingabegeräts 2;
- Figur 3: eine Explosionsdarstellung des zur erfindungsgemäßen Bedieneinrichtung 1 aus Figur 1 gehörigen elektromechanischen Eingabegeräts 2;
- Figur 4: eine Schnittansicht der erfindungsgemäßen Bedieneinrichtung 1 aus Figur 1.

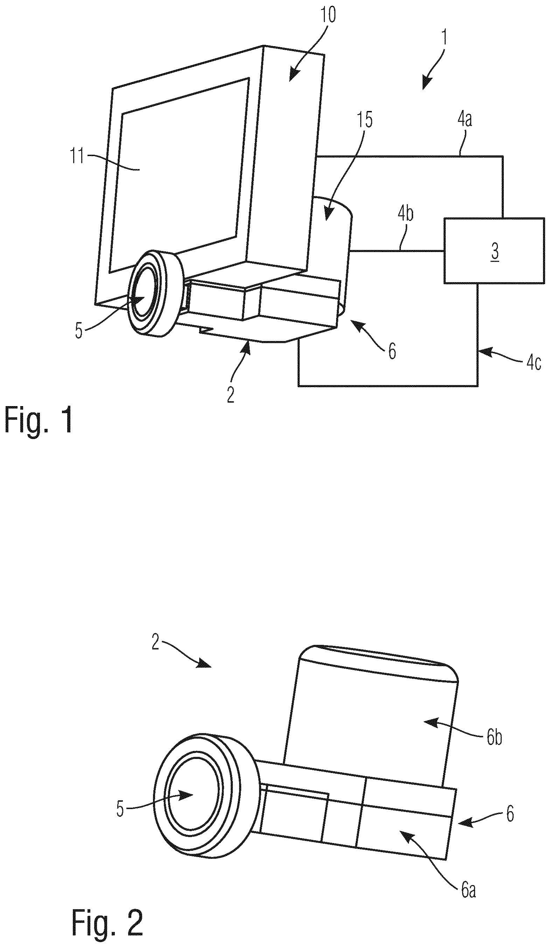

Die erfindungsgemäße Bedieneinrichtung 1 weist eine elektronische Pixelmatrixanzeige 1 auf, um einem nicht dargestellten Bediener einen optischen Anzeigeinhalt auf einer zugehörigen Anzeigefläche 11 zu visualisieren. Wie in Figur 1 gezeigt, ist die Anzeigefläche 11 eben ausgebildet. Beispielsweise handelt es sich um eine hintergrundbeleuchtete Flüssigkristallanzeige, beispielsweise im TFT-Aufbau, oder eine Anzeige in OLED-Bauweise. Die erfindungsgemäße Bedieneinrichtung 1 weist ferner eine über einen Datenbus 4a mit der elektronischen Pixelmatrixanzeige 10 verbundene Steuereinheit 3, auf, was in Figur 1 nur schematisch angedeutet ist. Die Steuereinheit 3 bewirkt eine Änderung des optischen Anzeigeinhalts über den Datenbus 4a mit einer vorgegebenen Latenz, also einer Verzögerung zwischen Ausgabe der Steuereinheit 3 und Veränderung des optischen Anzeigeinhalts in der Anzeigefläche 11. Beispielsweise kommuniziert die Steuereinheit 3 mit der elektrischen Pixelmatrixanzeige 10 über einen CAN-Bus, LIN-BUS, Felxray-Bus, MOST-Bus oder TTCAN-Bus als Datenbus 4a. Als Latenz wird hier nicht nur die durch die Datenübertragung verursachte maximale Verzögerung angesehen, sondern die Summe aller maximal möglichen Verzögerungen, die neben der reinen Datenbus 4a Übertragung auch durch die Treiberelektronik der elektronischen Pixelmatrixanzeige 19 verursacht wird. In der Regel wird die Latenz von einer durch den Datenbus 4a verursachten Verzögerung dominiert sein. Da letztere aber, insbesondere beim CAN-Bus, mit der Anzahl der gleichzeitig sendenden Einheiten des BUS-Systems variiert, obliegt es dem Fachmann, hier eine maximale Latenz statistisch anhand der zu erwartenden Kommunikationssituation zu ermitteln.

Die erfindungsgemäße Bedieneinrichtung 1 weist ferner ein elektromechanisches Eingabeteil 2, insbesondere einen Drehsteller, zur Vornahme einer händischen Verstellung, insbesondere Drehverstellung, als Bedieneingabe durch den Bediener aus. Das elektromechanische Eingabeteil 2 ist mit der Steuereinheit 3 zur Übermittlung einer Stellungsinformation elektrisch leitend über einen Leiter oder eine Datenleitung oder einen weiteren Datenbus 4c verbunden ist, um eine Änderung des optischen Anzeigeinhalts durch die Steuereinheit 3 aufgrund und in Reaktion auf eine Stellungsänderung des elektromechanischen Eingabeteils 2 zu triggern. Das elektromechanische Eingabeteil 2 ist bei der gezeigten Ausführungsform ein Drehsteller mit neben der Drehverstellung zusätzlichen Bedienfreiheitsgraden. Zur Vornahme der Bedieneingabe weist das elektromechanische Eingabeteil 2 einen rotatorisch beweglich gelagerten Bedienknopf 5 zu einer händischen Drehverstellung des elektromechanischen Eingabeteils 2 auf. Der Bedienknopf 5 überragt die Anzeigefläche 11 in axialer Richtung. Das elektromechanische Eingabeteil 2 ist in einem Gehäuse 6 aufgenommen, das an der elektronischen Pixelmatrixanzeige 10 festgelegt ist und diese umgreift.

Wie Figur 1 zeigt, ist ferner ein auf das elektromechanische Eingabeteil 2, wie den Drehsteller, einwirkender Aktuator 15 vorgesehen, der mit der Steuereinheit 3 elektrisch leitend über die Leitung 4b verbunden ist, um mittels eines von der Steuereinheit ausgegebenen Steuersignals ein für den Bediener während oder nach der Drehverstellung haptisch merkbares Feedback zu erzeugen.

Erfindungsgemäß wird die Ausgabe des Steuersignals an den Aktuator 15 durch die Steuereinheit 3 verzögert, um die zuvor erwähnte Latenz zumindest teilweise zu kompensieren. Die erfindungsgemäße Vorgehensweise sorgt dafür, dass die optische Reaktion mit der haptischen Reaktion in zeitlicher Hinsicht zusammenrückt, was dazu führt, dass Irritationen des Bedieners bezüglich des Umfangs seiner Verstellung vermieden werden und eine daraus veranlasste Überverstellung unwahrscheinlicher wird, also insgesamt die Bedienzuverlässigkeit erhöht wird.

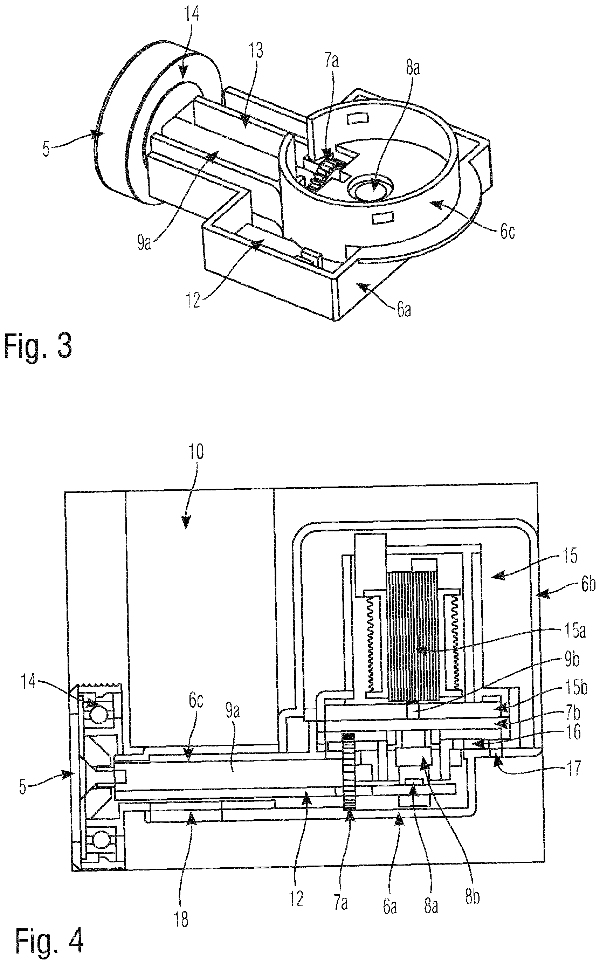

Wie Figur 2 zeigt, ist das Gehäuse 6 mehrteilig aufgebaut und umfasst zwei äußere Halbschalen 6a, 6b und daneben, wie in Figur 3 gezeigt, ein Zwischengehäuse 6c. Das Zwischengehäuse 6c ist relativ zu den äußeren Halbschalen 6a, 6b beweglich, um dem elektromechanischen Eingabeteil 2 zusätzliche Bedienfreiheitsgrade zu verleihen.

Wie Figur 4 zeigt, ist der Aktuator 15 zur Erzeugung eines der Verstellung des Bedienknopfs 5 des elektromechanischen Eingabeteils 2 entgegengerichteten Gegenmoments, auch als Lastmoment bezeichnet, als haptisches Feedback bei der Verstellung des Bedienknopfs 5 ausgebildet. Dazu weist der Aktuator 15 einen Rotor 15b, beispielsweise aus einem ferromagnetischen Material, und eine Spule 15a zur Erzeugung eines mit dem Rotor 15a zusammenwirkenden Magnetfelds auf.

Wie Figur 4 zeigt, ist der Bedienknopf 5 des elektromechanischen Eingabeteils 2 mittels des Wälzlagers 14 rotatorisch beweglich gelagert. Eine drehfest mit dem Bedienknopf 5 verbundene Eingangswelle 9a übertragt über ein Getriebe 7a, 7b die Drehverstellung des Bedienknopfs 5 auf eine Ausgangswelle 9b, an der der Rotor 15a des Aktuators 15 sowie ein Drehstellungsgeber 8b, hier ein Permanentmagnet, festgelegt ist.

Es ist ferner ein mit dem Drehstellungsgeber 8b zusammenwirkender, ruhender Drehstellungsnehmer 8a, hier Hallsensor, zur Detektion der Drehverstellung des Bedienknopfs 5 auf, welcher auf einer im Gehäuse 6 aufgenommenen Leiterplatte 12 angeordnet ist.

Um ausgeprägte Lastmomente zu erzeugen, weist das Getriebe 7a, 7b des elektromechanischen Eingabeteils 2 ein Übersetzungsverhältnis von Eingangswelle 9a zur Ausgangswelle 9b größer 1 auf.

Das Getriebe 7a, 7b ist als Winkelgetriebe ausgebildet und weist ein an der Ausgangswelle 9b festgelegtes Kronrad 7b auf, in das ein radial verzahntes, mit der Eingangswelle 9a drehfest verbundenes Zahnrad 7a ein greift, so dass sich die Ausgangswelle 9b parallel zur Anzeigefläche 11 erstreckt.

Dabei erstreckt sich die Eingangswelle 9a entlang einer Flanke der elektronischen Pixelmatrixanzeige 10 von einer dem Bediener zugewandten, die optische Anzeigefläche 11 umfassenden Oberseite der elektronischen Pixelmatrixanzeige 10 zu einer Rückseite der elektronischen Pixelmatrixanzeige 10, wobei die Eingangswelle 9a orthogonal zu der von der Anzeigefläche 11 aufgespannten Ebene orientiert ist.

Wie zuvor erwähnt, sind der Bedienknopf 5 und die Eingangswelle 9a in axialer Richtung und/oder in radialer Richtung jeweils entgegen einer Rückstellkraft bewegbar gelagert. Dazu ist die Eingangswelle 9a in einem beweglichen Zwischengehäuse 6c gelagert, das beweglich an einem durch die äußeren Halbschalen 6a, 6b gebildeten Außengehäuse gelagert und in diesem beweglich aufgenommen. Dadurch ist das Zwischengehäuse 6c samt Bedienknopf 5 in axialer Richtung der Eingangswelle 9a niederdrückbar und ferner um einen sich senkrecht zur Eingangswelle 9a erstreckenden, von der Halbschale 9b ausgebildeten Schwenkzapfen 16 verschwenkbar. Der jeweilige Freiheitsgrad ist bevorzugt durch eine zugehörige, nicht dargestellte, beispielsweise optische Detektionseinrichtung detektierbar, um so dem Drehsteller als elektromechanisches Eingabeteil 2 zusätzliche Eingabefunktionalitäten zu verleihen, während die Rückstellung in die jeweilige Ruhestellung durch jeweils ein Paar von Permanentmagneten 17 und 18 bewirkt wird.

## Patentansprüche

1. Bedieneinrichtung (1) aufweisend:
eine elektronische Pixelmatrixanzeige (10), um einem Bediener einen optischen Anzeigeinhalt auf einer Anzeigefläche (11) zu visualisieren;
ein elektromechanisches Eingabeteil (2) zur Vornahme einer händischen Verstellung als Bedieneingabe durch den Bediener;
eine Steuereinheit (3), die mit dem elektromechanischen Eingabeteil (2) zur Übermittlung einer Stellungsinformation verbunden ist und mit der elektronischen Pixelmatrixanzeige (10) verbunden ist, um eine Änderung des optischen Anzeigeinhalts auf eine Stellungsänderung des elektromechanischen Eingabeteils (2) mittels der Steuereinheit (3) zu triggern;
wobei die Steuereinheit (3) über einen Datenbus (4a) mit der elektronischen Pixelmatrixanzeige (10) und/oder über den oder einen weiteren Datenbus (4c) mit dem elektromechanischem Eingabeteil (2) verbunden ist, so dass eine Änderung des optischen Anzeigeinhalts mit einer vorgegebenen Latenz auf die Stellungsänderung bewirkt wird;
einen auf das elektromechanische Eingabeteil (2) einwirkenden Aktuator (15), der mit der Steuereinheit (3) verbunden ist, um mittels eines von der Steuereinheit (3) ausgegebenen Steuersignals nach der durch die Verstellung bewirkten Stellungsänderung ein für den Bediener haptisch merkbares Feedback zu erzeugen;
wobei die Ausgabe des Steuersignals an den Aktuator (15) durch die Steuereinheit (3) verzögert wird, um die Latenz zumindest teilweise zu kompensieren; und der Aktuator (15) zur Erzeugung eines der Verstellung eines Bedienknopfs (5) des elektromechanischen Eingabeteils (2) entgegengerichteten Gegenmoments als haptisches Feedback bei der Verstellung des Bedienknopfs (5) ausgebildet ist.

2. Bedieneinrichtung (1) nach dem vorhergehenden Anspruch, wobei der Aktuator (15) einen Rotor (15b) und eine Spule (15a) zur Erzeugung eines mit dem Rotor zusammenwirkenden Magnetfelds umfasst.

3. Bedieneinrichtung (1) nach einem der vorhergehenden Ansprüche, wobei das elektromechanische Eingabeteil Folgendes aufweist:
der Bedienknopf (5) ist rotatorisch beweglich gelagert, um eine händische Drehverstellung des Bedienknopfs (5) zu ermöglichen,
eine drehfest mit dem Bedienknopf (5) verbundene Eingangswelle (9a);
ein Getriebe (7a, 7b) zur Übertragung der Drehverstellung des Bedienknopfs (5) auf eine Ausgangswelle (9b);
einen an der Ausgangswelle (9b) festgelegter Drehstellungsgeber (8b);
einen mit dem Drehstellungsgeber (8a) zusammenwirkenden, ruhenden Drehstellungsnehmer (8b) zur Detektion der Drehverstellung des Bedienknopfs (5) aufweist; und
wobei der Aktuator (15) auf die Ausgangswelle (9b) wirkt.

4. Bedieneinrichtung (1) nach dem vorhergehenden Anspruch, wobei das Getriebe (7a, 7b) ein Übersetzungsverhältnis größer 1 aufweist.

5. Bedieneinrichtung (1) nach einem der vorhergehenden Ansprüche 3 oder 4, wobei das Getriebe (7a, 7b) ein Winkelgetriebe ist.

6. Bedieneinrichtung (1) nach einem der vorhergehenden Ansprüche 3 bis 5, wobei die Ausgangswelle (9b) sich parallel zur Anzeigefläche (11) erstreckt.

7. Bedieneinrichtung (1) nach einem der vorhergehenden Ansprüche 3 bis 6, wobei der Bedienknopf (5) die Anzeigefläche (11) in axialer und/oder radialer Richtung überragt.

8. Bedieneinrichtung (1) nach einem der vorhergehenden Ansprüche 3 bis 7, wobei sich die Eingangswelle (9a) entlang einer Flanke der elektronischen Pixelmatrixanzeige (10) von einer dem Bediener zugewandten, die Anzeigefläche (11) umfassenden Oberseite der elektronischen Pixelmatrixanzeige (10) zu einer Rückseite der elektronischen Pixelmatrixanzeige (10) erstreckt.

9. Bedieneinrichtung (1) nach einem der vorhergehenden Ansprüche 3 bis 8, wobei der Bedienknopf (5) und die Eingangswelle (9a) in axialer Richtung und/oder in radialer Richtung jeweils entgegen einer Rückstellkraft bewegbar gelagert ist.

10. Bedieneinrichtung (1) nach einem der vorhergehenden Ansprüche, wobei die Latenz bis auf einen maximalen zeitlichen Abstand von 30ms, bevorzugt 20ms, zwischen Änderung des optischen Anzeigeinhalts und einem Einsetzen des haptisch merkbaren Feedbacks kompensiert wird.

11. Verwendung der Bedieneinrichtung (1) nach einem der vorhergehenden Ansprüche in einem Kraftfahrzeug.

12. Verfahren zur Steuerung eines haptischen Feedbacks, mit den folgenden Schritten:
Bereitstellen einer Bedieneinrichtung (1) aufweisend eine elektronische Pixelmatrixanzeige (10), um einem Bediener einen optischen Anzeigeinhalt auf einer Anzeigefläche (11) zu visualisieren, ein elektromechanisches Eingabeteil (2) zur Vornahme einer händischen Verstellung als Bedieneingabe durch den Bediener; eine Steuereinheit (3), die mit dem elektromechanischen Eingabeteil (2) zur Übermittlung einer Stellungsinformation verbunden ist und mit der elektronischen Pixelmatrixanzeige (10) verbunden ist, um eine Änderung des optischen Anzeigeinhalts auf eine Stellungsänderung des elektromechanischen Eingabeteils (2) mittels der Steuereinheit (3) zu triggern, wobei die Steuereinheit (3) über einen Datenbus (4a) mit der elektronischen Pixelmatrixanzeige (10) und/oder über den oder einen weiteren Datenbus (4c) mit dem elektromechanischem Eingabeteil (2) verbunden ist, so dass eine Änderung des optischen Anzeigeinhalts über den Datenbus (4a, 4c) mit einer vorgegebenen Latenz auf die Stellungsänderung bewirkt wird; einen auf das elektromechanische Eingabeteil (2) einwirkenden Aktuator (15), der mit der Steuereinheit (3) verbunden ist, um mittels eines von der Steuereinheit (3) ausgegebenen Steuersignals nach der durch die Verstellung bewirkten Stellungsänderung ein für den Bediener haptisch merkbares Feedback zu erzeugen, wobei der Aktuator (15) zur Erzeugung eines der Verstellung eines Bedienknopfs (5) des elektromechanischen Eingabeteils (2) entgegengerichteten Gegenmoments als haptisches Feedback bei der Verstellung des Bedienknopfs (5) ausgebildet ist;
nach bewirkter Stellungsänderung des elektromechanischen Eingabeteils (2) Triggern einer Änderung des optischen Anzeigeinhalts mittels der Steuereinheit (3);
Änderung des optischen Anzeigeinhalts der elektronischen Pixelmatrixanzeige (10) mit einer vorgegebenen Latenz auf die Stellungsänderung;
Verzögerte Ausgabe des Steuersignals an den Aktuator (15) durch die Steuereinheit (3), um die Latenz zumindest teilweise zu kompensieren.

13. Verfahren (1) nach dem vorhergehenden Anspruch, wobei die Latenz bis auf einen maximalen zeitlichen Abstand von 30ms, bevorzugt 20ms, zwischen Änderung des optischen Anzeigeinhalts und einem Einsetzen des haptisch merkbaren Feedbacks kompensiert wird.
